Europäisches Patentamt

(19) European Patent Office    (11) Numéro de publication: **0 239 459**

Office européen des brevets    **B1**

(12)    FASCICULE DE BREVET EUROPEEN

(45) Date de publication du fascicule du brevet: **16.05.90**    (51) Int. Cl.⁵: **G 01 K 7/22**

(21) Numéro de dépôt: **87400516.8**

(22) Date de dépôt: **09.03.87**

(54) **Capteur gainé de température.**

(30) Priorité: **14.03.86 FR 8603651**

(43) Date de publication de la demande:
**30.09.87 Bulletin 87/40**

(45) Mention de la délivrance du brevet:
**16.05.90 Bulletin 90/20**

(84) Etats contractants désignés:
**AT DE ES FR IT**

(56) Documents cités:
**EP-A-0 125 366**
**EP-A-0 203 858**
**DE-A-2 852 584**
**DE-U-8 400 006**

(73) Titulaire: **CIAPEM**
**137, rue de Gerland**
**F-69007 - Lyon (FR)**

(72) Inventeur: **Garofalo, François**
**THOMSON-CSF SCPI 19, avenue de Messine**
**F-75008 Paris (FR)**

(74) Mandataire: **Phan, Chi Quy et al**
**THOMSON-CSF SCPI**
**F-92045 PARIS LA DEFENSE CEDEX 67 (FR)**

**Description**

La présente invention concerne un capteur gainé de température.

Dans les instruments ou dispositifs de mesure thermique, et dans les appareils industriels ou ménagers tels que les appareils de chauffage, de cuisson, les lave-linge, les lave-vaisselle, les sèche-linge où la température d'un milieu, d'un fluide, d'une eau ou d'un air doit être contrôlée ou mesurée, souvent des capteurs de températures sont utilisés.

Les capteurs de température connus et vendus dans le commerce sont nombreux. Les uns tels que des thermostats bimétalliques à températures fixes, des thermostats réglables à bulbe et capillaire, sont à des prix raisonnables, mais seulement utilisables dans des appareils ou dispositifs à circuits électromécaniques de fonctionnement. Les autres, par exemple des capteurs à base de semiconducteurs, sont adaptés pour leur utilisation dans des appareils ou dispositifs à circuit électronique. Souvent, des capteurs à base de silicium se vendent à des prix abordables en tant que pièces nues, non protégées par une enveloppe, gaine ou capote et ne sont pas de ce fait directement utilisables dans des milieux plus ou moins corrosifs ou pollués, par exemple dans l'eau des cuves de lave-linge ou lave-vaisselle ou dans l'air chaud d'un circuit de séchage d'un sèche-linge ou d'un lavant-séchant.

Certains capteurs connus à base de semi-conducteurs sont protégés et comprennent en général une structure compliquée qui entraîne une fabrication onéreuse et un assemblage minutieux exigeant un relativement grand nombre d'opérations longues et délicates. Ces capteurs sont ainsi chers et pratiquement exclus des applications dans des appareils électroménagers par exemple. Un des capteurs connus destiné à mesurer la température d'un moteur d'un véhicule est décrit dans le document EP—A—0 125 366. Ce capteur comprend une gaine métallique tubulaire fermée à une des extrémités, un ensemble à pastilles à base de semi-conducteurs maintenues assemblées suivant une liaison électrique prédéterminée, monté dans le fond de l'alésage de cette gaine, espacé des parois latérales de celle-ci mais en contact électrique avec ce fond, un bouchon électriquement isolant fermant l'extrémité ouverte de cette gaine et muni d'une borne axiale de connexion électrique dans un trou de passage axial, et un ressort métallique hélicoïdal axialement monté entre ce bouchon isolant et cet ensemble à pastilles à base de semi-conducteurs réalisant une liaison électrique entre cet ensemble et cette borne axiale de connexion électrique et exerçant une ferme application de cet ensemble contre le fond de cette gaine pour renforcer leur contact et créer une liaison électrique à travers cette ensemble à pastilles à base de semiconducteurs entre cette borne électrique axiale et une autre borne de connexion électrique constituée par cette gaine métallique.

Un autre capteur connu de température pour un moteur à combustion interne est décrit dans le document DE—U—8 400 006. Ce capteur à base de semiconducteur comprend d'une manière analogue au précédent capteur, une gaine métallique tubulaire fermée à une des extrémités, un ensemble à pastille à base de semiconducteur formée d'une superposition axiale de deux pièces d'extrémité de contact électrique et d'une pastille centrale et disposé dans le fond de l'alésage de cette gaine en contact électrique avec ce fond et isolé de la paroi de cette gaine par un manchon électriquement isolant, une pièce de contact munie d'un joint annulaire d'étanchéité et de rondelles électriquement isolantes, fermant l'extrémité ouverte de cette gaine et servant de borne d'attache de fil de connexion électrique, et un ressort métallique hélicoïdal axialement monté entre cette pièce de contact et cet ensemble à pastille à base de semiconducteur, isolé des parois latérales de cette gaine par ce manchon isolant, réalisant une liaison électrique entre cet ensemble à pastille et cette pièce de contact et exerçant une ferme application de cet ensemble à pastille contre le fond de cette gaine pour renforcer leur contact et créer une liaison électrique à travers cet ensemble à pastille.

Des capteurs connus de température décrits dans les documents EP—A—0 203 858 et DE—A—2 852 584 sont destinés à mesurer de la température respectivement pour des voitures automobiles et des camions. Ces capteurs sont des capteurs à base de semi-conducteurs à structures compliquées comme celles des capteurs mentionnés dans des paragraphes précédents. Leurs structures compliquées respectives sont encore alourdies par un système à bilame d'alerte de dépassement d'une température de seuil décrit dans le document EP—A—0 203 858 et par des modes particuliers de montage de la pastille à base de semiconducteur sur une ou des plaques de refroidissement.

Les principaux inconvénients de ces capteurs connus proviennent de leurs structures compliquées entraînant des opérations d'assemblage longues et délicates et menant à un prix de revient relativement élevé.

La présente invention ayant pour but d'éviter ces inconvénients permet de réaliser un capteur efficace de température adapté pour des circuits électroniques, présentant une structure simple le rendant facile et économique à fabriquer et à assembler et muni d'une gaine, enveloppe ou capote le rendant utilisable dans des milieux corrosifs ou pollués tels que l'eau des cuves des lave-linge ou lave-vaisselle ou de l'air chaud de séchage d'un sèche-linge ou d'un lavant-séchant.

Selon l'invention, un capteur de température muni d'une gaine tubulaire fermée à une des extrémités, ouverte à l'autre extrémité, renfermant dans le fond fermé de son alésage longitudinal une thermistance, est caractérisé en ce qu'il comprend dans cette gaine tubulaire d'une part sur les côtés latéraux opposés de l'alésage de celle-ci, deux lames de contact effectuant une liaison électrique entre cette thermistance et l'extérieur, et d'autre part un piston disposé dans cet alésage de la gaine entre ces deux lames de contact, mettant cette thermistance en place dans le fond de la gaine et fermant cette gaine par son embase appliquée et immobilisée contre l'extrémité ouverte de cette gaine, et en ce que la gaine tubulaire et le piston sont constitués en un matériau bon conducteur thermique et électriquement isolant.

Pour mieux faire comprendre l'invention, on en décrit ci-après un certain nombre d'exemples de réalisation illustrés par des dessins ci-annexés dont:

- la figure 1 représente une vue schématique en coupe longitudinale d'un capteur gainé de température réalisé selon l'invention et en cours de montage,

- la figure 2 représente une vue schématique en coupe transversale suivant un plan II—II du capteur de la figure 1,

- la figure 3 représente une vue schématique en coupe longitudinale de la gaine du capteur de la figure 1,

- la figure 4 représente une vue schématique, d'en bout de la gaine de la figure 3,

- la figure 5 représente une vue schématique en coupe transversale suivant un plan V—V de la gaine de la figure 3,

- la figure 6 représente une vue schématique en coupe transversale suivant un plan VI—VI de la gaine de la figure 3, et

- la figure 7 représente une vue schématique en perspective d'un lave-linge muni d'un capteur de température de la figure 1.

Un capteur de température 1 selon un exemple de réalisation de l'invention comprend une thermistance 2 sous forme d'une pastille, métallisée sur ses deux faces opposées, une gaine tubulaire 3 fermée à une de ses extrémités, ouverte à l'autre extrémité et recevant dans son fond 4 la thermistance 2, un piston 5 coulissant dans l'alésage 6 de la gaine tubulaire 3, assurant par poussée par le bout 7 de son corps, une mise en place de la thermistance 2 dans le fond 4 de la gaine tubulaire 3 et réalisant par application et immobilisation de son embase 8 contre l'extrémité ouverte 9 de la gaine tubulaire 3, une fermeture de cette gaine 3 et un maintien en place de la thermistance 2, et deux lames de contact 10, 11 insérées longitudinalement dans l'alésage 6 entre la gaine 3, la thermistance 2 et le piston 5, sur les deux côtés diamétralement opposés de ces derniers, effectuant une liaison électrique entre cette thermistance 2 et l'extérieur, par application élastique de leurs extrémités intérieures 12, 13 contre les deux faces opposées métallisées de cette thermistance, et par présentation de leurs extrémités de sortie 14, 15 en saillie vers l'extérieur de la gaine 3, ce qui facilite leurs connexions électriques.

La thermistance 2 est constituée par celle d'un type connu par exemple celle à base de carbone fritté sous forme d'une pastille ou disque à deux faces opposées métallisées.

La gaine tubulaire 3 est constituée en un matériau d'un type connu tel que le polypropylène bon conducteur thermique, électriquement isolant et excellemment résistante à la température d'utilisation du capteur 1. Le piston 5 est réalisé en un matériau électriquement isolant d'un type connu soit identique à celui de la gaine 3 soit différent de celui de cette gaine 3. Le piston 5 comprend un corps rectangulaire 19 et une embase circulaire ou polygonale 8.

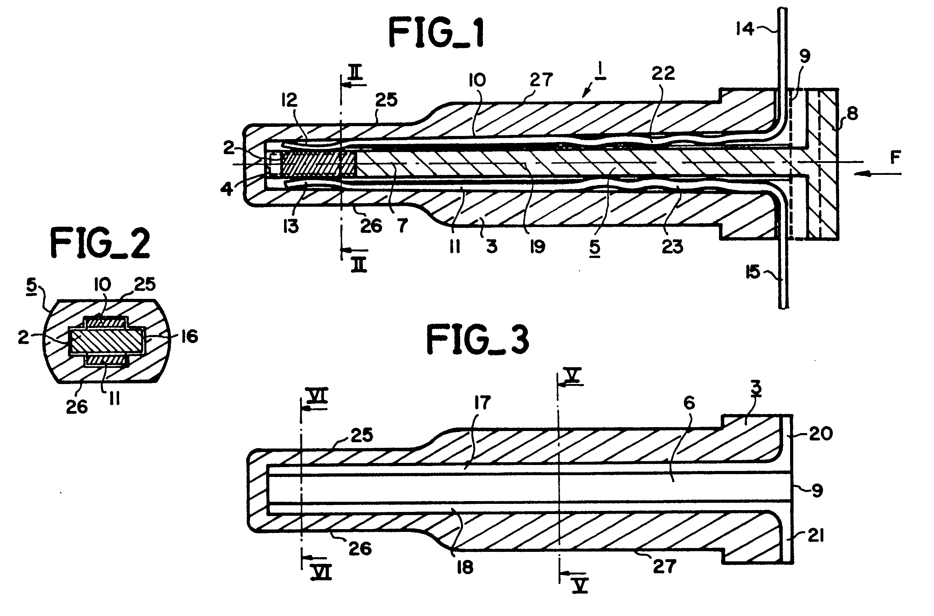

La gaine tubulaire 3 comprend un alésage longitudinal 6 formé d'un trou longitudinal central sensiblement rectangulaire 16 destiné à l'introduction et au logement de la thermistance en forme de pastille 2 et au coulissement et au logement du corps 19 à section transversale rectangulaire du piston 5, et de deux rainures longitudinales sensiblement rectangulaires 17, 18 qui prolongent latéralement ce trou central 16 pour définir une section transversale en croix de l'alésage 6, et sont destinées à recevoir les deux lames de contact 10 et 11. Dans l'exemple illustré à la figure 3, la gaine tubulaire 3 comprend dans la face 9 à son extrémité ouverte, deux évidements radiaux 20 et 21 qui prolongent respectivement les deux rainures latérales 17, 18 de l'alésage 6 et reçoivent respectivement les extrémités de sortie 14, 15 repliées en angle droit des lames de contact 10 et 11.

Les deux lames de contact 10 et 11 sont réalisées en un matériau élastique, bon conducteur électrique.

Les lames de contact 10 et 11 comprennent des extrémités intérieures 12 et 13 cambrées de manière à obtenir un bon contact entre ces lames 10 et 11 et la thermistance 2 sous l'effet d'une compression élastique de ces extrémités 12 et 13 contre la gaine 3, par cette thermistance 2.

Les lames de contact 10 et 11 comprennent de préférence dans leur corps des cambrures transversales espacées 22 et 23 formant des ondulations longitudinales qui mettent en valeur leur élasticité et assurent un bon maintien en place du piston 5 sous l'effet d'une compression élastique de ces lames de contact 10 et 11 contre la gaine 3 par le corps 19 de ce piston 5.

La fermeture de l'extrémité ouverte 9 de la gaine 3 par l'embase 8 du piston 5 est faite selon une technique connue de fixation ou de scellement telle qu celle par clips, par coincement, par collage, par soudage.

Pour rendre plus sensible le capteur 1, l'épaisseur de la gaine 3 est amincie dans sa zone entourant la thermistance 2, par réalisation de deux méplats longitudinaux et parallèles 25, 26 dans l'extrémité fermée de cette gaine 3. Il en résulte que la gaine 3 comprend une zone aplatie 25, 26 entourant son extrémité fermée et une zone cylindrique 27, 9 ou à section polygonale s'étendant sur son extrémité ouverte.

Dans un assemblage du capteur I, les deux lames de contact 10, 11 sont d'abord mises en place dans les rainures latérales rectangulaires 17, 18 de la gaine 3, la thermistance 2 est ensuite introduite dans le fond de l'alésage 6 de la gaine 3 sous la poussée du piston 5 suivant le sens de la flèche F de la figure 1 et l'embase 8 de ce piston 5 est enfin appliquée et fixée ou scellée contre l'extrémité ouverte 9 de la gaine 3 pour la fermer.

L'embase du piston 5 occupe alors la position représentée en traits discontinus dans la figure 1 tandis que la thermistance 2 bute contre le fond 4 de la gaine, sa position étant représentée également en traits discontinus.

La structure perfectionnée du capteur gainé de température 1 décrit ci-dessus rend sa fabrication et son montage facile, rapide et par conséquent économique sans que son efficacité soit compromise.

Dans une première variante de réalisation non représenté, les deux lames de contact 10, 11 sont incorporées dans la gaine 3 par moulage avec cette dernière, et le montage du capteur 1 se réduit à une introduction de la thermistance 2 dans le fond 4 de l'alésage de cette gaine 3 à l'aide du piston 5 et un scellement ou une fixation de l'embase 8 de ce piston 5 contre l'extrémité ouverte 9 de cette gaine 3.

Dans une deuxième variante de réalisation non représente, les deux lames de contact 10, 11 sont rendues solidaires du piston 5 par une technique connue telle que celle par clips, par moulage... Dans cette variante de réalisation, la thermistance 2 est, lors d'un montage du capteur 1 soit montée entre les extrémités élastiques 12 et 13 des lames de contact 10, 11 solidaires du piston 5 avant l'introduction de ce dernier dans l'alésage 6 de la gaine 3 soit introduite dans le trou 16 de l'alésage 6 et mise en place dans le fond de la gaine 3 sous la poussée du piston 5 muni de lames de contact 10, 11.

Le capteur gainé de température 1 est protégé par la gaine 3 et l'embase 8 du piston 5, contre les agressions des milieux corrosifs ou pollués dans lesquels un contrôle ou une mesure de température doit être effectué. Dans son application le capteur économique gainé de température 1 peut faire partie d'un circuit d'un appareil ou dispositif de contrôle ou de mesure de température ou d'une machine industrielle ou d'un appareil électroménager tel qu'un lave-linge, un lave-vaisselle, un sèche-linge, un lavant-sèchant.

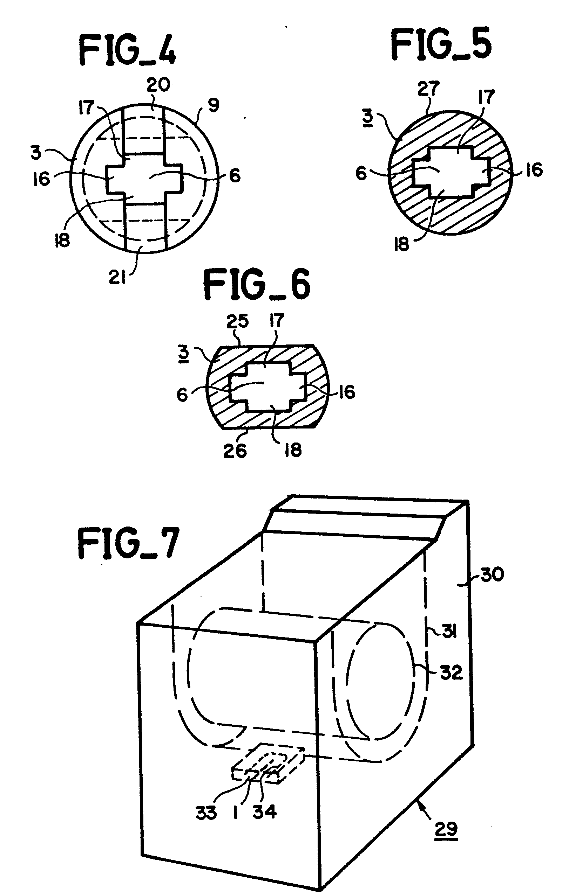

Dans un lave-linge 29 schématiquement illustré dans la figure 7 pourvu d'une carrosserie 30, d'une cuve 31 et d'un tambour à linge 32, le capteur gainé de température 1 peut être soit introduit à travers un trou non représenté dans la cuve 31 et fixé d'une manière étanche sur cette cuve soit monté (figure 7) sur une bride 33 d'un élément chauffant 34 et fixé en même temps que cet élément chauffant dans la cuve 31.

Dans un sèche-linge non représenté, le capteur gainé de température 1 est introduit à travers un trou dans une conduite de circulation d'air chaud et fixé en place par des moyens de fixation connus.

Plongé dans un milieu dont la température doit être contrôlée ou mesurée, la thermistance 2 du capteur 1 protégée par la gaine 3 bonne conductrice de la chaleur et électriquement isolante, traduit une variation de températures de ce milieu en une variation de résistance électrique de cette thermistance et permet à un circuit électrique ou électronique de type connu d'un instrument ou appareil de transformer cette variation de résistance électrique en valeurs numériques de températures ou en signaux électriques de commande d'un autre organe ou composant de ce circuit électrique ou électronique.

Dans l'exemple de réalisation illustré, la thermistance 2 a un diamètre de l'ordre de 5,5 millimètres et une épaisseur de 1,8 millimètre environ. La gaine 3 comprend d'une part un corps de l'ordre de 35 millimètres de longueur et de 9 millimètres de diamètre, avec une zone aplatie à son extrémité fermée délimitée par des méplats 25 et 26 parallèles et espacés l'un de l'autre de l'ordre de 7 millimètres et définissant une épaisseur de gaine de l'ordre de 1,5 millimètre et avec un alésage formé d'un trou rectangulaire de 5,6 millimètres sur 2 millimètres, et de deux rainures latérales rectangulaires de 3,2 millimètres sur 0,8 millimètre, et d'autre part à son extrémité ouverte, un bord circulaire de l'ordre de 5 millimètres de longueur et de 11 millimètres de diamètre.

Le piston 5 comprend un corps rectangulaire de l'ordre de 5,3 millimètres de largeur, de 32,4 millimètres de longueur et de 1,8 millimètre d'épaisseur et une embase circulaire de l'ordre de 11 millimètres de diamètre et de 2 millimètres d'épaisseur.

Les lames de contact 10 et 11 ont une largeur de 2,8 millimètres et une épaisseur de 0,6 millimètre environ.

Le capteur gainé de température 1 a ainsi une dimension relativement petite, peu encombrante en plus des avantages d'un coût de revient économique et d'une excellente efficacité et fiabilité de fonctionnement.

**Revendications**

1. Capteur de température muni d'une gaine tubulaire (3) fermée à une des extrémités, ouverte à l'autre extrémité, renfermant dans le fond fermé (4) de son alésage longitudinal (6) une thermistance (2), caractérisé en ce qu'il comprend dans cette gaine tubulaire (3) d'une part sur les côtés latéraux opposés de l'alésage (6) de celle-ci, deux lames de contact (10, 11) effectuant une liaison électrique entre cette thermistance (2) et l'extérieur, et d'autre part un piston (5) disposé dans cet alésage (6) de la gaine (3) entre ces deux lames de contact (10, 11), mettant cette thermistance (2) en place dans le fond de la gaine (3) et fermant cette gaine par son embase (8) appliquée et immobilisée contre l'extrémité ouverte de cette gaine, et en ce que la gaine tubulaire (3) et le piston (5) sont constitués en un matériau bon conducteur thermique et électriquement isolant.

2. Capteur selon la revendication 1, caractérisé en ce que l'alésage longitudinal (6) est formé d'un trou central longitudinal rectangulaire (16) et de deux rainures longitudinales rectangulaires (17, 18) prolongeant latéralement ce trou central (16) pour définir une section transversale en croix.

3. Capteur selon la revendication 1, caractérisé en ce que le piston (5) comprend un corps à section transversale rectangulaire (19) et une embase circulaire (8) ou polygonale.

4. Capteur selon la revendication 1, caractérisé en ce que les lames de contact (10, 11) comprennent des extrémités intérieures cambrées (12, 13) et, dans leur corps, des cambrures transversales (22, 23) formant des ondulations longitudinales.

5. Capteur selon la revendication 4, caractérisé en ce que les lames de contact (10, 11) sont constituées en un matériau élastique et bon conducteur électrique.

6. Capteur selon l'une des revendications 4 et 5, caractérisé en ce que les lames de contact (10, 11) sont incorporés dans la gaine (3) par moulage avec cette dernière.

7. Capteur selon l'un des revendications 1, 4 et 5, caractérisé en ce que les lames de contact (10, 11) sont rendues solidaires du piston (5).

8. Capteur selon l'une des revendications 1 et 2, caractérisé en ce que la gaine tubulaire (3) comprend une zone aplatie (25—26) entourant son extrémité fermée et une zone à section circulaire ou polygonale s'étendant sur son extrémité ouverte.

9. Capteur selon l'une des revendications 1 à 8, caractérisé en ce que la thermistance (2) est de l'ordre de 5,5 millimètres de diamètre et de 1,8 millimètre d'épaisseur, la gaine tubulaire (3) est de l'ordre de 40 millimètres de longueur, 9 millimètres de diamètre et de 1,5 millimètre d'épaisseur dans son extrémité fermée, de 5,6 millimètres sur 2 millimètres de trou rectangulaire central (16) de l'alésage (6), de 3,2 millimètres sur 0,8 millimètre de rainures latérales rectangulaires (17, 18), le piston (5) a un corps de l'ordre de 32,4 millimètres de longueur, de 5,3 millimètres de largeur et de 1,8 millimètre d'épaisseur et une embase de l'ordre de 11 millimètres de diamètre et de 2 millimètres d'épaisseur et deux lames de contacts (10, 11) de l'ordre de 2,8 millimètres de largeur et de 0, 6 millimètre d'épaisseur.

**Patentansprüche**

1. Temperaturfühler, versehen mit einer röhrenförmigen Hülse (3), die an einem der Enden geschlossen und am anderen Ende offen ist und im geschlossenen Boden (4) ihrer Längsbohrung (6) einen Thermistor (2) enthält, dadurch gekennzeichnet, daß er in dieser röhrenförmigen Hülse (3) einerseits auf den gegenüberliegenden seitlichen Seiten der Bohrung (6) derselben zwei Kontaktzungen (10, 11) enthält, die eine elektrische Verbindung zwischen diesem Thermistor (2) und außen herstellen, und andererseits einen Kolben (5), der in dieser Bohrung (6) der Hülse (3) zwischen diesen beiden Kontaktzungen (10, 11) angeordnet ist, diesen Thermistor (2) im Boden der Hülse (3) plaziert und diese Hülse mit seinem an das offene Ende dieser Hülse gedrückten und festgestellten Sockel (8) abschließt, und darin, daß die röhrenförmige Hülse (3) und der Kolben (5) aus einem gut wärmeleitenden und elektrisch isolierenden Material bestehen.

2. Fühler nach Anspruch 1, dadurch gekennzeichnet, daß die Längsbohrung (6) aus einem rechteckigen, länglichen Mittelloch (16) und aus zwei rechteckigen Längsnuten (17, 18) gebildet ist, die dieses Mittelloch (16) seitlich verlängern, um einen kreuzförmigen Querschnitt abzugrenzen.

3. Fühler nach Anspruch 1, dadurch gekennzeichnet, daß der Kolben (5) einen Körper mit rechteckigem Querschnitt (19) und einen kreisförmigen (8) oder polygonalen Sockel umfaßt.

4. Fühler nach Anspruch 1, dadurch gekennzeichnet, daß die Kontaktzungen (10, 11) gewölbte Innenenden (12, 13) umfassen und in ihrem Körper längliche Wellungen formende Querwölbungen (22, 23).

5. Fühler nach Anspruch 4, dadurch gekennzeichnet, daß die Kontaktzungen (10, 11) aus einem elastischen und gut wärmeleitenden Material bestehen.

6. Fühler nach einem der Ansprüche 4 und 5, dadurch gekennzeichnet, daß die Kontaktzungen (10, 11) in die Hülse (3) im Formverfahren durch Verpressen mit letzterer eingelassen sind.

7. Fühler nach einem der Ansprüche 1, 4 und 5, dadurch gekennzeichnet, daß die Kontaktzungen (10, 11) mit dem Kolben (5) verbunden sind.

8. Fühler nach einem der Ansprüche 1 und 2, dadurch gekennzeichnet, daß die röhrenförmige Hülse (3) einen ihr geschlossenes Ende umgebenden abgeflachten Bereich (25—26) umfaßt, und einen sich über ihr offenes Ende erstreckenden Bereich kreisförmigen oder polygonalen Querschnitts.

9. Fühler nach einem der Ansprüche 1 bis 8, dadurch gekennzeichnet, daß der Thermistor (2) einen Durchmesser von ungefähr 5,5 Millimetern und eine Dicke von ungefähr 1,8 Millimetern hat, die röhrenförmige Hülse (3) eine Länge von ungefähr 40 Millimetern, einen Durchmesser von ungefähr 9 Millimetern und eine Dicke von ungefähr 1,5 Millimetern in ihrem geschlossenen Ende hat, mit einem ungefähr 5,6 Millimeter mal 2 Millimeter messenden rechteckigen Mittelloch (16) der Bohrung (6), mit 3,2 Millimeter mal 0,8 millimeter messenden rechteckigen Seitennuten (17, 18), der Kolben (5) einen ungefähr 32,4 Millimeter langen, 5,3 Millimeter breiten und 1,8 Millimeter dicken Körper hat und einen Sockel von ungefähr 11 Millimetern Durchmesser und 2 Millimetern Dicke, und zwei Kontaktzungen (10, 11) von ungefähr 2,8 Millimetern Breite und 0,6 Millimetern Dicke.

**Claims**

1. A temperature sensor provided with a tubular sheath (3) closed at one of its ends, open at the other end and enclosing in the closed bottom (4) of its longitudinal bore (6) a thermistor (2), characterized in that in this tubular sheath (3) it comprises on the one hand on the opposite lateral sides of the bore (6) two contact blades (10 and 11) producing an electrical connection between said thermistor (2) and the outside, and on the other hand a piston (5) located in the bore (6) of the sheath (3) between these two contact blades (10 and 11), keeping the thermistor (2) in place in the bottom of the sheath (3) and shutting off this sheath by its base (8) applied and held immobile against the open end of the sheath, and in that the tubular sheath (3) and the piston (5) are made of a material with a good thermal conductivity and which is electrically insulating.

2. The sensor as claimed in claim 1, characterized in that the longitudinal bore (6) is formed by a central longitudinal rectangular hole (16) and by two rectangular longitudinal grooves (17 and 18) laterally extending this central hole (16) in order to define a cruciform cross section.

3. The sensor as claimed in claim 1, characterized in that the piston (5) comprises a body with a rectangular cross section (19) and a circular (8) or polygonal base.

4. The sensor as claimed in claim 1, characterized in that the contact blades (10 and 11) comprise interior curved ends (12 and 13) and, in the body thereof, transverse curved parts (22 and 23) forming longitudinal corrugations.

5. The sensor as claimed in claim 4, characterized in that the contact blades (10 and 11) are constituted by an elastic material which is a good electrical conductor.

6. The sensor as claimed in any one of the preceding claims 4 and 5, characterized in that the contact blades (10 and 11) are incorporated in the sheath (3) by molding together with same.

7. The sensor as claimed in any one of the preceding claims 1, 4 and 5, characterized in that the contact blades (10 and 11) are fixed in relation to the piston (5).

8. The sensor as claimed in claim 1 or claim 2, characterized in that the tubular sheath (3) comprises a flattened zone (25 and 26) surrounding its closed end and a zone with a circular or polygonal section extending along its open end.

9. The sensor as claimed in any one of the preceding claims 1 through 8, characterized in that the thermistor (2) is of the order of 5.5 mm in diameter and of 1.8 mm in thickness, the tubular sheath (3) is of the order of 40 mm in length, 9 mm in diameter and 1.5 mm in thickness in its closed end, with a dimension of 5.6 mm by 2 mm for the central rectangular hole (16) of the bore (6) and with a dimension of 3.2 mm by 0.8 mm for the lateral rectangular grooves (17 and 18), and the piston possesses a body with a length of the order of 32.4 mm, 5.3 mm in width and 1.8 mm in thickness and a base of the order of 11 mm in diameter and 2 mm in thickness and two contact blades (10 and 11) of the order of 2.8 mm in width and 0.6 mm in thickness.

FIG_1

FIG_2

FIG_3

EP 0 239 459 B1

# FIG_4

# FIG_5

# FIG_6

# FIG_7